# EUROPEAN PATENT SPECIFICATION

(11) **EP 4 368 449 B1**
(45) Date of publication and mention of the grant of the patent: **02.04.2025**
(21) Application number: 22206979.1
(22) Date of filing: 11.11.2022
(51) Int. Cl.: B60P 7/13, B65D 88/12

(54) **FRAME FOR HOOKLIFT**
RAHMEN FÜR EINEN HAKENLIFT
CHÂSSIS POUR CROCHET

(43) Date of publication of application: 15.05.2024
(73) Proprietor: Multi Modal Development AB, 269 43 Båstad (SE)
(72) Inventor: HENRIKSSON, Arne, 269 43 Båstad (SE)
(74) Representative: Zacco Sweden AB

(56) References cited:
- DE-U1- 29 905 528
- JP-A- S5 885 735
- JP-B2- 3 866 931
- SE-C2- 522 775

## Description

### TECHNICAL FIELD

The present invention relates to a load exchanger frame intended to be lifted up and locked onto a load exchanger vehicle/hook-lifter. Load exchanger frames are known e.g. from SE 522775 C2, DE 29905528 U1, JPS 5885735 A and JP 3866931 B2.

### BACKGROUND

A load exchanger frame, also called a roll platform frame or flatrack, is a well-known product on the world market. It is popular in the transport industry, as a truck with load exchanger equipment in the form of an arm articulated transversely of the vehicle and provided with a hook can lift up and drag a load exchanger frame on board the vehicle without assistance from external lifting tools. With hydraulics for the arm shaped at an angle on the vehicle, it is twisted in an arched motion along the vehicle (upwards, rearwards and downwards), wherein the opening of the hook mounted on the arm is twisted, so that it can encompass a lifting bracket/bail bar on the load exchanger frame. Now the vehicle can be reversed simultaneously with the arm of the load exchanger equipment in a reversing arched motion lifting up and dragging onboard the load exchanger frame onto the vehicle. The load exchanger equipment can both pick up a load exchanger frame to the vehicle from the ground or put down a load exchanger frame on the ground and thereby quickly and simply exchange its load. If the load exchanger frame is provided with rollers in the rear, it can, with the vehicle hook encompassing the load exchanger frame lifting bracket and holding with the hook the front end of the load exchanger frame slightly above the ground, displace the load exchanger frame for a short distance rolling on the rear rollers to/from the suitable staging area.

Load exchanger frames are manufactured on the basis of the several existing standards. For example, in Europe the standards DIN, AFNOR, SMS, FS, DS, NS, STANAG are used plus some more. These are similar in terms of vertical and longitudinal beams, but are unfortunately different as to the locking to vehicles. This constitutes a high risk of driving with unlocked load exchanger frames unloaded or loaded in the traffic and limits the use of load exchanger frames in different embodiments for varying loads. Therefore the use has become a local phenomenon. It occurs that drivers of load exchanger cars have handled load exchanger frames according to another standard than the one, for which the load exchanger car is intended. This has happened without the driver of the car having been aware that a "wrong" load exchanger frame has been handled (e.g. as regards lock type and lock state), and the driver has transported the load exchanger frame in general traffic with no other locking engaged than the hook encompassing the lifting bracket. In light of this, it would be desirable to obtain a load exchanger frame, which is less dependent on a specific standard to enable increased safety and reduced risk of the load exchanger frame not being adequately locked during driving.

### SUMMARY OF THE INVENTION

An object of the present invention is to at least partially lessen the disadvantages mentioned above as regards load exchanger frames. This and other objects, which will appear from the following description, are obtained by means of a load exchanger frame according to the accompanying independent claim. Examples of embodiments are presented in the dependent claims as well as in the following description.

The invention is based on the insight that by providing a load exchanger frame with two different locking devices, each of which fulfils a respective standard and make the load exchanger frame adjustable, such that a driver can choose which locking device to be activated, then the load exchanger frame can be handled safely by different vehicles, which are constructed according to different standards. The use of a load exchanger frame thus becomes both safer and more versatilely applicable than prior art load exchanger frames. For example, it offers the possibility of sending load units in international traffic and benefits international cooperation, e.g. in rescue and defence contexts.

The invention relates to a load exchanger frame intended to be lifted up and locked onto a load exchanger vehicle/hook-lifter. The load exchanger frame comprises:
- a first locking device, which has an active state for enabling locking of the load exchanger frame to the load exchanger vehicle by means of the first locking device and an inactive state, in which locking by means of the first locking device is prevented,
- a second locking device, which has an active state for enabling locking of the load exchanger frame to the load exchanger vehicle by means of the second locking device and an inactive state, in which locking by means of the second locking device is prevented,
- a regulator, which is switchable between a first state and a second state,
- a linking device, which links the regulator with both the first locking device and the second locking device, so that a switch of the regulator between the first and the second state, or vice versa, causes a switch of the state of the first and the second locking device,
wherein, when the regulator is in the first state, the first locking device is in its active state and the second locking device in its inactive state, and when the regulator is in its second state, the first locking device is in its inactive state and the second locking device in its active state.

The invention thus enables optionality. By providing the load exchanger frame with a first locking device according to a standard and a second locking device according to another standard, a driver can select the locking device fitting the load exchanger vehicle, onto which the load exchanger frame is to be loaded.

The inactive state of the respective locking device is suitably positioned, so that the locking device does not obstruct or "collides" with equipment on a vehicle adapted to the second locking device.

The regulator is suitably switchable, so that a driver can grip the regulator by hand and switch it between the first state and the second state. Thus, the regulator is suitably a mechanical regulator. The general idea of the invention, i.e. having the option of switching two locking device between active and inactive states, respectively, is not limited to mechanical regulators, though. For example, the general idea of the invention also includes electronically controlled regulators.

According to at least one embodiment, the load exchanger frame comprises two parallel side beams, travelling in length of the load exchanger frame, wherein the first locking device comprises a locking beam extending transversely of the load exchanger frame between the two side beams, wherein the locking beam has through-going locking holes, with which locking pins from the load exchanger vehicle are intended to engage in the active state of the first locking device. This variant of the first locking device is advantageous as it fits AFNOR, SMS and other standards.

According to at least one embodiment, the second locking device comprises locking lugs that are pivotably arranged about a shaft, wherein the locking lugs are twisted downwards into the active state of the second locking device for interaction with locking pins from the load exchanger vehicle and twisted upwards in the inactive state of the second locking device. This variant of the second locking device is advantageous as it fits DIN, STANAG and other standards.

Different directions are indicated above. To avoid misunderstanding, the following is clarified. The load exchanger frame has a predetermined orientation relative to load exchanger vehicles when the load exchanger frame is lifted up (and preferably locked) to the load exchanger vehicle. Then the length of the load exchanger frame corresponds to the length of the vehicle. Likewise, the transverse direction of the load exchanger frame corresponds to the transverse direction of the load exchanger frame. The load exchanger frame has an underside, which is intended to face the ground, and a top side, which is intended to turn away from the ground. The direction "upwards" is thus a direction extending from the underside towards the top side, while the direction "downwards" is a direction extending from the top side towards the underside.

According to at least one embodiment, the inactive state, for both the first and the second locking device, implies that at least a portion of the locking device is higher up in load exchanger frame height than in the active state, wherein the switch between the active and the inactive state is obtained by means of a rotational motion of the locking device, or by means of a rotational motion of a mechanism coupled to the locking device, which mechanism converts the rotational motion to a linear vertical motion of the locking device. This is advantageous as the inactive locking device is then out of the way as regards underlying equipment on the load exchanger vehicle.

The general idea of the invention is thus not limited to a specific motion for the switch between active and inactive states. In certain embodiments, the states of both locking devices can thus be regulated by rotation of the locking devices. In other embodiments, the states of both locking devices can be regulated by a linear displacement of the locking devices (e.g. by means of a mechanism that converts a rotational motion to a linear motion according to the outline above). In further embodiments one of the locking devices can be regulated by a rotation of the locking device, while the second locking device can be regulated by linear displacement. As will be explained in more detail below, a first locking device in the form of a transverse locking beam is well suitable for both rotational displacement and linear displacement.

According to at least one embodiment, the regulator comprises a twistable handle, wherein twisting of the handle causes displacement of the linking device in the length of the load exchanger frame, or wherein twisting of the handle causes twisting of the linking device about a geometric axis travelling longitudinally of the load exchanger frame. These variants are advantageous, as they enable simple switching between the active and the the inactive states of the locking devices. A locking device can for instance simply be arranged to follow the twisting of the linking device or allow a mechanism to follow the twisting of the linking device for conversion to linear motion. Similarly, a locking device can be coupled to the linking device, so that displacement longitudinally of the linking device draws a portion of the locking device with it, while another portion of the locking device is rotatably connected to a rotational axis, wherein a rotation of the locking device can be obtained.

In light of the above explanations, it should be clear that the load exchanger frame according to at least one embodiment, is configured, such that the linking device is arranged to be moved longitudinally of the load exchanger frame to twist both the first and the second locking device about respective geometric axes, which geometric axes extend transversely of the load exchanger frame. The stroke length of the locking devices and the linking devices are suitably made, so that the locking devices carry out a 90° motion, i.e. turns a quarter of a revolution, when switching between their respective active and inactive states. The first locking device is suitably displaced by 90° orientation-wise relative to the orientation of the second locking device. In other words, when the linking device is moved longitudinally due to the regulator being moved between the first state and the second state, both locking devices are affected, so that they switch to their active and inactive state, respectively, by a 90° motion and can subsequently be switched back by a reverse 90° motion caused by the regulator moving the linking device in the reverse direction longitudinally.

According to at least one embodiment, the linking device is arranged to be twisted about a geometric axis, extending in the length of the load exchanger frame, wherein a cam mechanism is arranged to follow the twisting motions of the linking device, depending on the twisting direction, transfer the twisting motion to a raise or lowering of the first locking device in the height of the load exchanger frame, while the second locking device is arranged to follow the twisting motions of the linking device. A cam mechanism enables a single conversion of twisting/rotational motion to linear displacement. In other embodiments, however, it is imaginable to use other types of motion converters, such as a gear mechanism.

According to at least one embodiment, the load exchanger frame comprises, at its front end, an impact beam travelling transversely of the load exchanger frame and intended to abut a stoppage on the equipment of the load exchanger vehicle, wherein the impact beam is movable in the height of the load exchanger frame between an upper state and a lower state, wherein the impact beam is operatively coupled to the regulator, so that when the regulator is in the first state, the impact beam is in its upper state, and when the regulator is in the second state, the impact beam is in its lower state. Though this invention is focused on creating a safe lock by means of switchable optional locking devices, it is worth noting that there are also other differences between different standards. One difference could for instance be the position of the impact beam. A possibility is to manually dismount the beam from one state and mount it fixedly in another state, when a vehicle with one standard is exchanged for a vehicle with another standard. However, the advantage of the embodiment presented above is that by operatively coupling the impact beam to the regulator, its state can be changed in the same operation as the change of the state of the locking devices. It should be noted, though, that this is only a possible embodiment, and that the general idea of the invention still can be combined with another way of moving the impact beam if so desired, e.g. by unscrewing it manually to lift/lower it into another state, wherein it is fastened with screws. Unlike the locking devices, an impact beam is often more easily available.

Another component of load exchanger frames, the state of which can be different among different standards is the lifting bracket that the hook of the vehicle has to grip. Though the state of the lifting bracket does not affect the functionality of the locking devices, the load exchanger frame is according to at least one embodiment configured for position adjustment of the lifting bracket. According to at least one embodiment, the load exchanger frame thus comprises, at its front end, a lifting bracket device, having a lifting bracket for receiving a hook belonging to the equipment of the load exchanger vehicle for lifting the load exchanger frame onto the load exchanger vehicle, wherein the lifting bracket is movable between two lockable states.

According to at least one embodiment, the lifting bracket device comprises a guide element for interaction with the lifting bracket, wherein the guide element defines an arched path, along which the lifting bracket is movable between said two lockable states. By such an arrangement, a single adjustment of the state of the lifting bracket is obtained, even if the lifting bracket is not operatively coupled to the regulator.

### BRIEF DESCRIPTION OF THE DRAWINGS

Fig. 1 shows a fictitious load exchanger frame, which does not constitute part of the invention.
Figs 2-3 show a load exchanger frame according to at least one embodiment of the invention.
Figs 4-10 show a load exchanger frame according to at least a second embodiment of the invention.

### DETAILED DESCRIPTION OF THE DRAWINGS

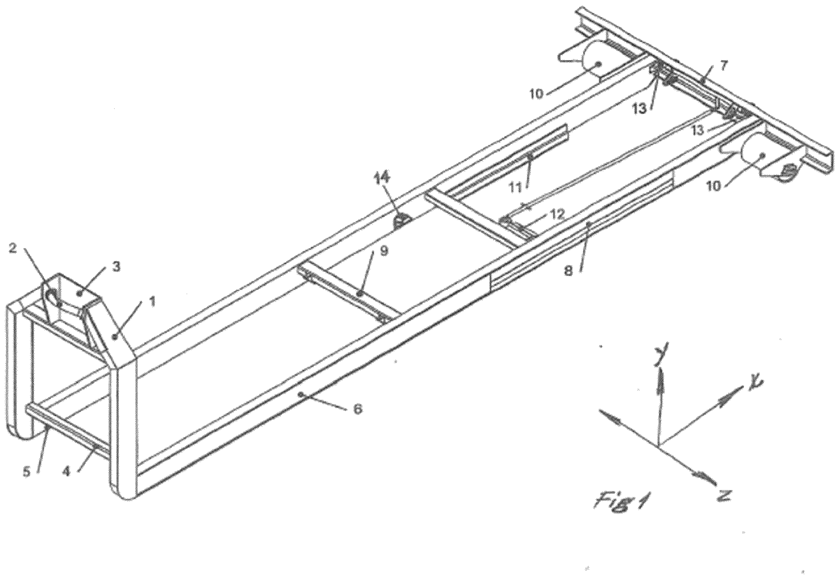

Fig. 1 shows a fictitious load exchanger frame, which does not constitute part of the invention. Usually, load exchanger frames have one type of locking device, but to facilitate the understanding of the coming discussion of the embodiments of the invention, the load exchanger frame in Fig. 1 is provided with two different types of locking device, which will be explained in the following.

Fig. 1 shows the following elements.

At its front end, the load exchanger frame has a lifting frame 1 (also called a vertical frame). At the lifting frame 1, there is a bail bar/lifting bracket 2. In all standards, the lifting bracket 2 is described as a fixed construction. There are at least two different bracket states and bracket angles in European standards. Behind the lifting bracket 2, there is a protection plate 3 (so that a lacking hook enclosure does not cause damage to the cargo). Below the lifting bracket 2, an impact beam 4 (also called a stop beam) is arranged. European standards include at least two different heights for the impact beam 4 related to the state of the lifting bracket 2. The load exchanger frame has interior front (usually square) locking holes 5 in side beams 6 (also called frame beams) for locking on trailers.

In the rear, the load exchanger frame has a rear cross beam 7, the appearance of which is adapted to the choice of superstructure, such as platform body, cabinet, ISO container, etc. Some load exchanger frames can have space 8 for external locking (this is for example optional equipment in Swedish standard).

In order to lock a load exchanger frame to the vehicle in a safe manner, the load exchanger frame is equipped with a suitable locking device. Fig. 1 illustrates a first locking device 9 in the form of a locking beam 9 with square through-going holes). A locking beams 9 is normally used in i.a. Swedish standard. However, the arrangement of the locking beam 9 is such that it "collides" with equipment on the vehicle, which has the other type of standard locking (second locking device 14, which will be discussed in more detail below).

The load exchanger frame can be provided with rollers 10. Such rollers 10 are usually fixedly positioned and used for rolling a load exchanger frame, when it is lifted up in the front lifting frame 1 lifting bracket 2 of the lifting hook of the load exchanger car.

A load exchanger frame can in certain cases also comprise an interior locking rail 11. It is used for rear interior locking on vehicles according to Swedish standard, but is not comprised by the first and second locking devices discussed in this application. Fig. 1 also shows a spreader limb release 12 for interaction with a spreader limb on a load exchanger flatbed, e.g. for spreading of loaded gravel.

In addition to the front locking holes 5, the load exchanger frame can also have rear (typically round) holes 13 for locking onto trailers. Forwardly directed locking pins on trailers come into the holes 13 at the rear cross beam 7, when the load exchanger car rolls the load exchanger frame rearwards on the trailer. Subsequently, the load exchanger frame is fixated on the trailer with locking in the front locking holes 5, when the load exchanger car has put down the front part of the load exchanger part on the trailer.

As already indicated above, the load exchanger frame is here illustrated with another locking device 14, comprising interior locking plates/locking lugs 14 according to DIN/STANAG standard. However, these locking lugs 14 "collide" with equipment on vehicles with Swedish standard locks, i.e. vehicles intended for the first locking device 9.

For the sake of clarity, we reiterate that this is a fictitious example, as it has traditionally been impossible for a load exchanger frame to have both the first locking device 9 and the second locking device 14, but only one of them.

During a transportation, locking to the load exchanger car automatically takes place for the last about 10 cm of the loading sequence, i.e. immediately before the load exchanger frame reaches its correct position on the load exchanger car. This takes place by the hook of the load exchanger car, during the motion on the car, twisting around and its opening changing from open and backwardly directed in order to be able to grip around the lifting bracket 2 in the load exchanger frame until the opening is forwardly directed, and thereby the "hook back" is directed backwards and prevents the front part of the load exchanger frame with lifting bracket 2 from moving upwards or backwards. The impact beam 4, i.e. the lower horizontal beam, prevents forward motion by abutting against a stoppage on the vertical arm, on top of which the hook is disposed.

At the same time, backwardly directed pins located on the equipment of the load exchanger car come in through-going holes in the locking beam 9 (in one type of standard), alternatively encompass the front and upper side of lugs 14 disposed on both interior sides of the side beams 6 of the load exchanger frame (in another type of standard). This takes place without the driver of the vehicle having to leave his or her working place in the driver's cabin of the vehicle.

As mentioned above, the load exchanger frame has the vertical lifting frame 1 at the front end, comprising a lifting bracket 2 for the hook of the vehicle as well as the impact beam 4 for positioning of the load exchanger frame longitudinally. The vehicle hook in the lifting bracket 2 prevents motion rearwards/upwards, and the impact beam 4 prevents forward motion by abutting against a stoppage on the vertical arm, on top of which the hook is disposed.

Laterally, the load exchanger frame is guided by the longitudinal side beams 6 inwards/outwards by guides on the vehicle as well as flanged rollers at the trailing edge of the vehicle. The load exchanger frame is guided and the underside of the side beams 6 rolls on their flanged guide rollers, when the load exchanger frame is lifted up with the hook/hook arm onto the vehicle.

The internal locks of the type with backwardly directed locking pins on the vehicle going into holes i the locking beam 9 in certain standards respectively backwardly directed locking pins that encompass the front and upper side of locking lugs 14 in other standards are intended to prevent the rear part of a load exchanger frame from twisting upwards and leave the vehicle e.g. at higher load centre of gravity. This prevents the cargo and possibly the vehicle from overturning.

Switching of the locking devices prescribed in the relevant standards can be done through displacement or remounting of locking beams 9 or locking lugs 14, which is both time-consuming and associated with risk, as it is necessary to be situated under parts of a load exchanger frame (often loaded) to be able to carry out this work. Moreover, it is difficult to subsequently ensure that the work has been done correctly, as the locking devices are visually covered by other equipment on a vehicle. So, as will be described below with reference to the remaining figures, the present invention solves the problem outlined by providing a load exchanger frame with both a first and a second locking device, e.g. in the form of said locking beam 9 respectively locking lugs 14, but with a regulator controlling the locking devices, so that only one of these is in an active state, while the other one is in an inactive state. In other words, the invention enables a first locking device, e.g. comprising said locking beam 9, to be used (active state) in a first type of standards, while due to stipulated running clearance internally between side beams 6, it must be out of the way (inactive state) in other standards, i.e. give a free zone in the entire length of the load exchanger frame. Correspondingly, the invention enables a second locking device, e.g. comprising said locking lugs 14, to be used (active state) in a second type of standards, while due to stipulated running clearance internally between side beams 6, it must be out of the way (inactive state) in the first type of standards, i.e. give a free zone in the entire length of the load exchanger frame.

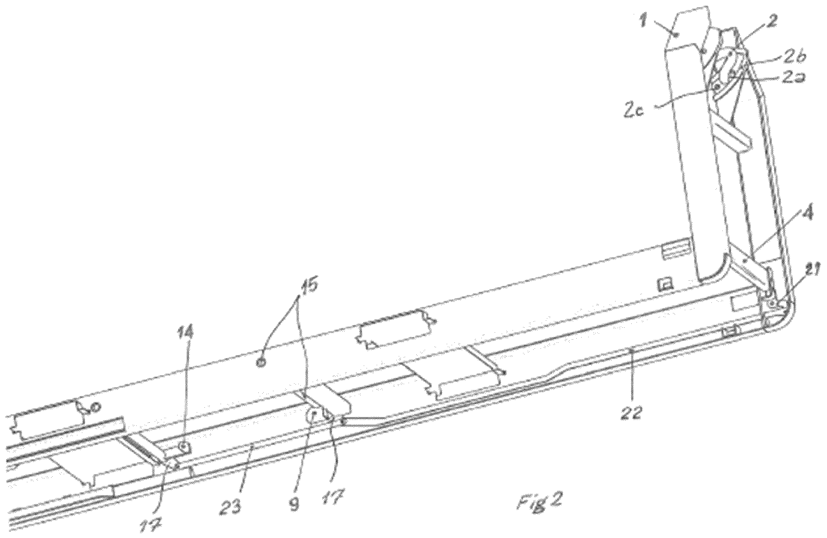

Though certain elements and components shown in Figs 2-10 resemble or correspond to the elements and components discussed in Fig. 1, the invention is not limited to these specific configurations of the elements and components, but can freely be varied within the scope of the invention defined in the claims.

In connection with the discussion of Figs 2-10, it is worth noting that reference will be made to the coordinate system illustrated in Fig. 1, i.e. the x axis represents the length of the load exchanger frame, the y axis represents the height of the load exchanger frame, and the z axis represents the transverse direction.

Figs 2-3 show a load exchanger frame according to at least one embodiment of the invention.

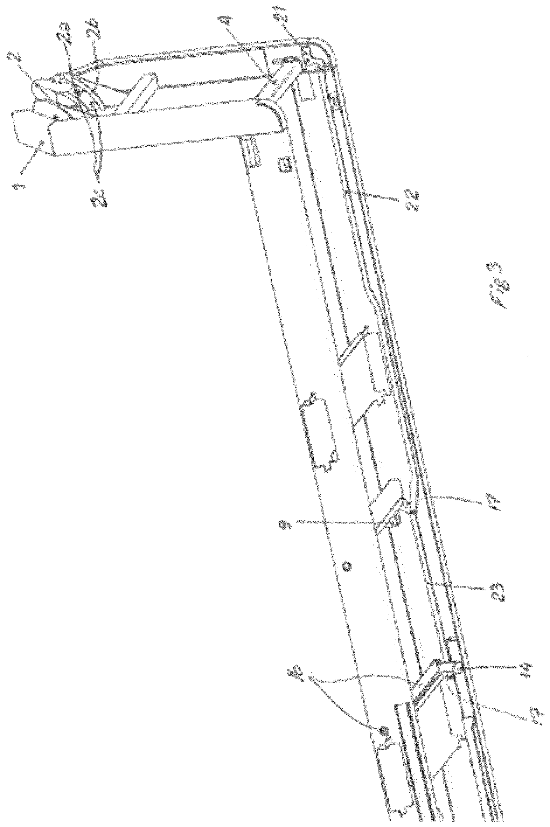

With reference to Figs 2 and 3, the load exchanger frame has a first locking device 9. The locking device 9 comprises a locking beam with locking sleeves marking holes for locking shaped according to AFNOR, SMS etc. standards. The locking sleeves are disposed on a twistable tube/twistable shaft 15 (see Fig. 2), extending transversely (z direction). The tube/shaft 15 can thus be twisted about a geometric z axis and is journalled thereon for stipulated running clearance in correct height and locking distance from vertical reference line through the highest point in the lifting bracket 2 according to standard in left and right longitudinal side beams (see side beams 6 in Fig. 1).

The load exchanger frame in Figs 2 and 3 also show a second locking device 14, comprising locking lugs according to DIN, STANAG and other standards. The locking lugs are disposed on a twistable tube/twistable shaft 16 (see Fig. 3). The tube/shaft 16 extends transversely and can thus be twisted about a geometric z axis. The tube/shaft 16 is journalled thereon for correct height and load distance for stipulated running clearance from a vertical reference line through the highest point of the lifting bracket 2 according to standard longitudinally left and right (see side beams 6 in Fig. 1).

The first locking device 9 with locking sleeves and the second locking device 14 with locking lugs are suitably moveable at 90° about their respective shafts 15, 16 via control arms 17 and a rear connection link 23 as well as arranged at 90° mutually relative to each other. Thereby only one of the locking devices 9, 14 is activated at a time, while the second one is twisted into an inactive state and out of the stipulated free zone between the longitudinal side beams (see the side beams 6 in Fig. 1) up to a certain height according to the respective standard, and which is to be found as free zone in the entire length of the load exchanger frame.

The load exchanger frame also has a regulator 21, here comprising a handle that is articulately arranged at the very front of the one side of the lifting arm 1 (alternatively at each side according to client requests ). By means of the handle, both locking devices 9, 14 are, via a connection link 22 further at the front, twistable between their active and inactive states, respectively. The front connection link 22 and the rear connection link 23 is thus comprised in a common linking device connecting the regulator 21 with the locking devices 9, 14. The correct state is suitably indicated by the state of the handle.

Fig. 2 shows the regulator in a first state, and the first locking device 9 is folded down in its active state. The second locking device 14 is folded up in its inactive state. In Fig. 3, however, the regulator 21 is set in its second state, which has caused the linking device 22, 23 to switch the first locking device 9 so that it is folded up in the inactive state, while the second locking device 14 has switched, so that it is folded down in its active state.

It should appear from the explanation above that the embodiment in Figs 2 and 3 illustrates a load exchanger frame intended to be lifted up and locked onto a load exchanger vehicle, wherein the load exchanger frame comprises:
- a first locking device 9, which has an active state for enabling locking of the load exchanger frame to the load exchanger vehicle by means of the first locking device 9, and an inactive state, in which locking by means of the first locking device 9 is prevented,
- a second locking device 14, which has an active state for enabling locking of the load exchanger frame to the load exchanger vehicle by means of the second locking device 14, and an inactive state, in which locking by means of the second locking device 14 is prevented,
- a regulator 21, which is switchable between a first state and a second state,
- a linking device 22, 23, which links the regulator 21 with both the first locking device 9 and the second locking device 14, so that a switch of the regulator 21 between the first and the second state, or vice versa, causes a switch of the state of the first and the second locking device 9, 14,
wherein, when the regulator 21 is in the first state, the first locking device 9 is in its active state and the second locking device 14 in its inactive state, and when the regulator 21 is in its second state, the first locking device 9 is in its inactive state and the second locking device 14 in its active state.

According to some embodiments, the impact beam 2 travelling transversely (z) can be movable in the height (y) of the load exchanger frame between an upper state and a lower state. Then the impact beam 4 is suitably operatively coupled to the regulator 21, so that when the regulator is in the first state, then the impact beam 4 is in its upper state, and when the regulator 21 is in the second state, then the impact beam 4 is in its lower state. The regulator 21 is single-sided in the illustration, but can also (possibly according to customer requests) be double-sided.

Fig. 2 also shows that the lifting bracket 2 is in its lower/rear state (and e.g. upwardly directed at 45°) and that the impact beam 4 is in a higher state simultaneously with the locking sleeves of the first locking device 9 is in the active state, while the locking lugs in the second locking device 14 are horizontal, inactive and twisted out of the free zone. This is in accordance with AFNOR, SMS etc. standards.

Fig. 3, however, shows the lifting bracket 2 in its upper/front state and guided to a state closer to 60° upwardly directed as prescribed by another standard, and the impact beam 4 is in a lower state simultaneously with the locking sleeves of the first locking device 9 being rearwards twisted up into the inactive state and out of the free zone between the side beams 6, while the locking lugs 14 are folded down and activated. This is in accordance with DIN, STANAG etc. standards.

It appears from the above that according to at least certain embodiments of the invention, the load exchanger frame comprises a lifting bracket device with a lifting bracket 2 that is movable between two states. One example of how to realize this movability is shown in Figs 2 and 3. The lifting bracket device has the lifting bracket 2 welded onto each side of the outer ends of the lifting bracket 2 to a T-profiled and arched internal slider 2a in right and left embodiments as in a corresponding outside sliding strip/guide element 2b shaped to the same arched shape also in right and left embodiments with a corresponding open T-profiled track can be guided in an arched motion between two positions and be locked by pin(s) in the intended locking hole 2c. The sliding strip/guide element 2b thus interacts with the slider 2a of the lifting bracket 2 and defines an arched path along which, the lifting bracket 2 is movable between two lockable states.

Though the lifting bracket 2 and the impact beam 4 are shown as switchable, the idea of the invention is not limited to this, but only constitutes a supplement in certain embodiments for further adjustment between different standards. The invention is focused on being able to switch between different locking devices in different standards in an efficient and safe manner.

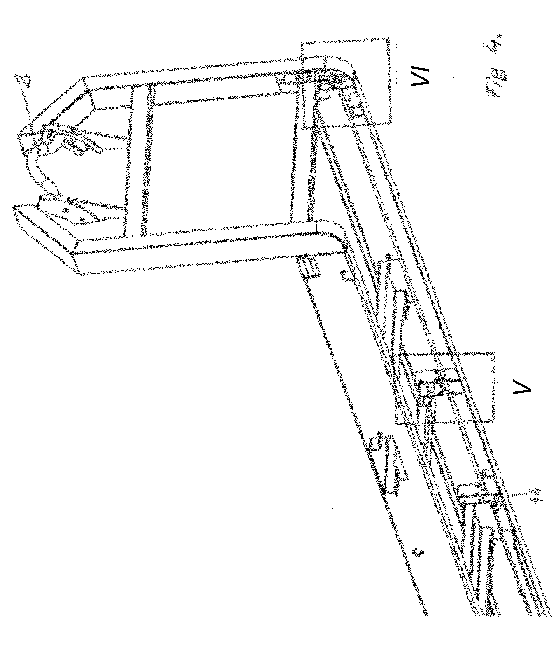

The embodiment in Figs 2 and 3 illustrates that for both the first locking device 9 and the second locking device 14, the inactive state implies that at least one portion of the locking device 9, 14 is higher up in load exchanger frame height (y) than in the active state, wherein the switch between the active and the inactive state can be obtained by means of a rotational motion of the locking device 9, 14. In particular, Figs 2 and 3 show that the regulator 21 can comprise a twistable handle, wherein the twisting of the handle causes displacement of the linking devices 22, 23 in the length (x) of the load exchanger frame for twisting both the first and the second locking device 9, 14 about respective geometric axes (here defined by physical tubes/shafts 15, 16), which geometric axes extend transversely of (z) of the load exchanger frame. Figs 4-10 show another variant of power transmission from the regulator to locking devices.

Figs 4-10 show a load exchanger frame according to at least a second embodiment of the invention.

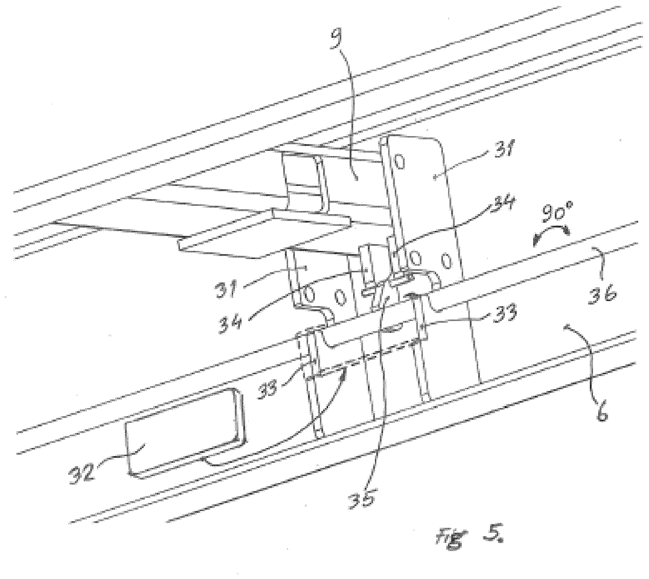

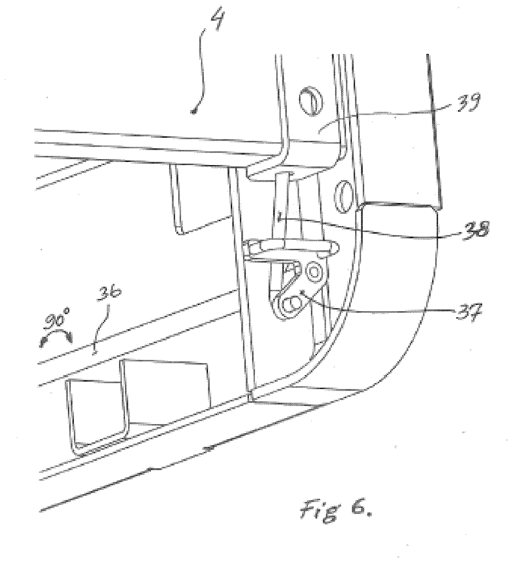

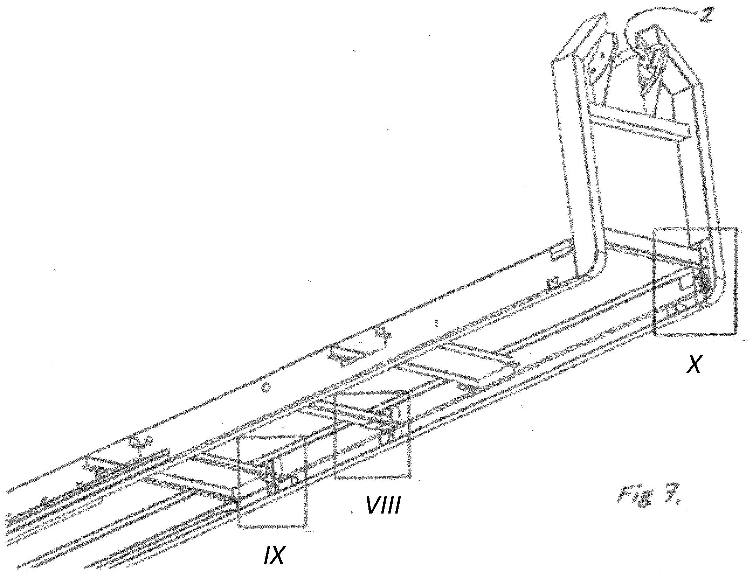

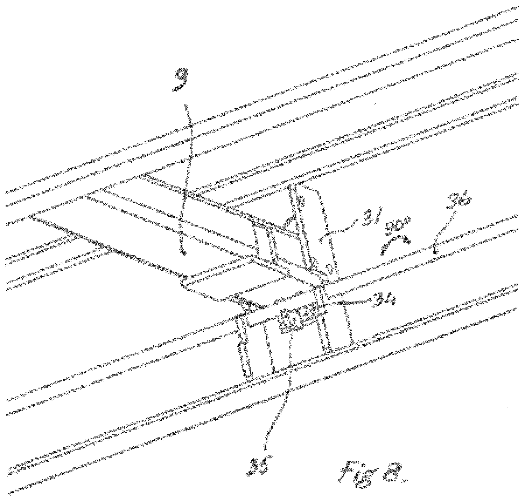

Figs 4-6 show a first setting of the load exchanger frame according to a type of standard (e.g. DIN, STANAG, etc.), while Figs 7-10 show a second setting of the load exchanger frame according to another type of standard (e.g. AFNOR, SMS, etc.). Fig. 4 indicates two framed details V and VI, which are shown in enlargement in Figs 5 and 6, respectively. Fig. 7 indicates three framed details VIII, IX and X, which are shown in enlargement in Figs 8, 9 and 10, respectively.

As in the embodiment in Figs 2-3, the embodiment in Figs 4-10 also has a first locking device 9 and a second locking device 14.

As appears from the detail views in Figs 5 and 8, the load exchanger frame has a first locking device 9 with locking beam (according to AFNOR, SMS etc. standards). The locking beam 9 is disposed vertically with free clearance between plates 31 located in front of and behind in left and right longitudinal side beams 6. The state of the locking beam in height is suitably arranged at stipulated locking distance in length from a vertical reference line through the highest point of the lifting bracket 2.

The lower and active state of the locking beam 9 is blocked downwards by a plate 32, which is fastened (welded) in recess 33 in the plates 31, and the locking beam 9 can in its lower active state with abutment against the plate 32 absorb the locking forces to which it is exposed and transfer these to the load exchanger frame. This plate 32 is lifted out of its state 33 in Fig. 5 to better visualize how the lower active and upper inactive states of the locking beams are reached via one (alternatively two in pairs) cam disc 34 per locking beam side impacted by a lever arm/ridge 35 with med cam followers (shown as a round bar), which is twisted rotary up/down by it to the twistable shaft 36 in the length (x direction) of the load exchanger frame. The twistable shaft 36 is included in this embodiment in a linking device connecting a regulator 37 with the locking devices 9, 14. The twistable shaft 36 is suitably twistable to 90°. The regulator 37 is illustrated in detail in Fig. 6, such as comprising a handle 37 farthest at the rear part of the lifting arm.

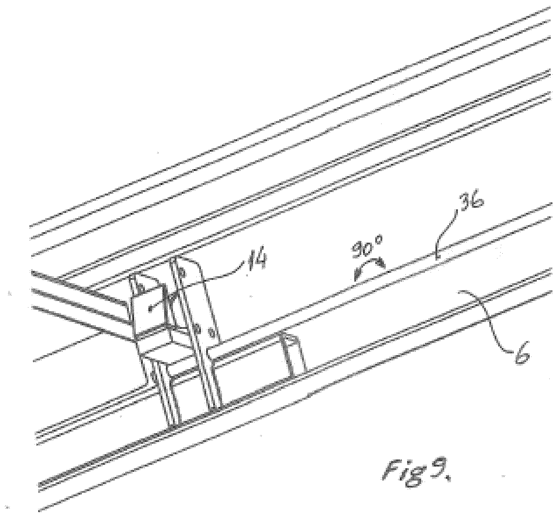

Fig. 9 illustrates the second locking device 14 in more detail. The second locking device 14 has locking lugs on each of the interior sides of the side beams of the load exchanger frame (according to DIN, STANAG etc. standards).

The locking lugs are arranged on the same twistable shaft 36 as the lever arm/ridge 35 with the cam followers. The locking lugs are position for correct height for running clearance and stipulated locking distance in length from a vertical reference line through the highest point of the lifting bracket.

Simultaneously with the locking lugs 14 in Fig. 9 being twisted 90° downwards by the regulator 37, the locking beam 9 in Fig. 5 is raised to an inactive high state, where it lies quite loosely resting via, at each left or right side of the underside of the load exchanger frame, an arranged double (or single) cam disc 34 with cam followers. The height of the cam disc and thereby the locking beam is controlled by a single (or double for equilibrium reasons to avoid the so-called chest of drawers effect) lever arm/ridge 35 with cam followers attached at the same twistable shaft 36 as the locking lugs 14 located behind.

Locking lugs 14 and lever arm/ridge 35 with cam followers to the locking beam 9 are suitably arranged on the common shaft 36 at 90° mutually relative to each other. Thereby only one of the locking devices is activated at a time, while the second one is twisted/raised out of the stipulated free zone to be found between the longitudinal beams along the entire length of the load exchanger frame.

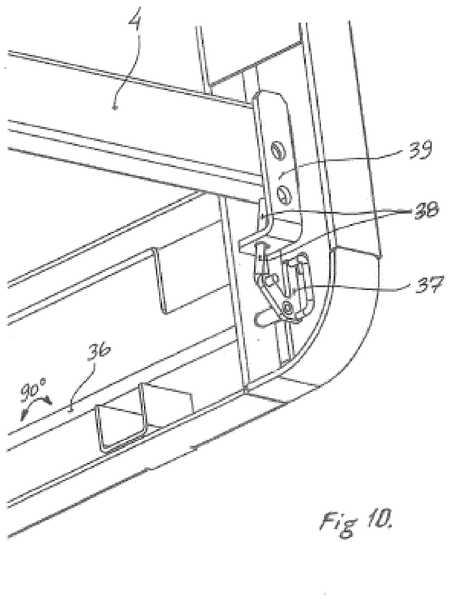

From the regulator (handle) 37 twistable at 90° in right and left embodiments at each side journalled farthest at the rear edge of the vertical frame, the locking devices by 90° twist of the shaft 36 about the geometric x axis are displaced between their active and inactive states, respectively. The correct state is indicated by the state of the handle. Moreover, the handle can be configured to also ensure, via a ratchet shaft 38 from journaling holes in the handle through a hole in the guide profile 39 of the impact beam 4 for maintaining correct height for the selected standard (see Fig. 10).

As in the embodiment in Figs 2-3, the lifting bracket 2 in the embodiment in Figs 4-10 can suitably be adjustable between two states along an arched path as described above.

In light of the explanation above, it should be clear that the embodiment in Figs 4-10 exemplify that for both the first and the second locking device 9, 14, the inactive state can imply that at least one portion of the locking device 9, 14 is higher up in load exchanger frame height (y) than in the active state, wherein the switch between the active and the inactive state can be obtained by means of a rotational motion of the second locking device and by a rotational motion of a mechanism 34, 35 coupled to the first locking device 9, which mechanism converts the rotational motion to a linear vertical motion of the locking device 9. In particular, it is shown that a linking device 36 can be arranged to be twisted about a geometric axis, extending longitudinally (x) of the load exchanger frame, wherein a cam mechanism 34, 35 is arranged to follow the twisting motions of the linking device 36, depending on the twisting direction, transfer the twisting motion to a raise or lowering of the first locking device 9 in the height (y) of the load exchanger frame, while the second locking device 14 is arranged to follow the twisting motions of the linking device 36.

## Claims

1. A load exchanger frame intended to be lifted up and locked onto a load exchanger vehicle, comprising:
- a first locking device (9), which has an active state for enabling locking of the load exchanger frame to the load exchanger vehicle by means of the first locking device (9), and an inactive state, in which locking by means of the first locking device (9) is prevented,
- a second locking device (14), which has an active state for enabling locking of the load exchanger frame to the load exchanger vehicle by means of the second locking device (14), and an inactive state, in which locking by means of the second locking device (14) is prevented, **characterized in that** it further comprises:
- a regulator (21, 37), which is switchable between a first state and a second state,
- a linking device (22, 23, 36), which links the regulator (21, 37) with both the first locking device (9) and the second locking device (14), so that a switch of the regulator (21, 37) between the first and the second state, or vice versa, causes a switch of the state of the first and the second locking device (9, 14),
wherein, when the regulator (21, 37) is in the first state, the first locking device (9) is in its active state and the second locking device (14) in its inactive state, and when the regulator (21, 37) is in its second state, the first locking device (9) is in its inactive state and the second locking device (14) in its active state.

2. A load exchanger frame according to claim 1, comprising two parallel side beams (6), travelling longitudinally (x) of the load exchanger frame, wherein the first locking device (9) comprises a locking beam (9) extending transversely (z) of the load exchanger frame between the two side beams (6), wherein the locking beam (9) has through-going locking holes, with which locking pins from the load exchanger vehicle are intended to engage in the active state of the first locking device (9).

3. A load exchanger frame according to anyone of claims 1-2, wherein the second locking device (14) comprises locking lugs (14) that a pivotably arranged about a shaft (16), wherein the locking lugs (14) are twisted downwards into the active state of the second locking device (14) for interaction with locking pins from the load exchanger vehicle and twisted upwards in the inactive state of the second locking device (14).

4. A load exchanger frame according to anyone of claims 1-3, wherein, for both the first and the second locking device (9, 14), the inactive state implies that at least a portion of the locking device (9, 14) is higher up in load exchanger frame height (y) than in the active state, wherein the switch between the active and the inactive locking device is obtained by a rotational motion of the locking device (9,14) or by a rotational motion of a mechanism (34, 35) coupled to the locking device (9), which mechanism converts the rotational motion to a linear vertical motion of the locking device (9).

5. A load exchanger frame according to anyone of claims 1-4, wherein the regulator (21, 37) comprises a twistable handle (21), wherein twisting of the handle (21) causes displacement of the linking device (22, 23) in the length (x) of the load exchanger frame, or wherein twisting of the handle (37) causes twisting of the linking device (36) about a geometric axis travelling in the length (x) of the load exchanger frame.

6. A load exchanger frame according to anyone of claims 1-5, wherein the linking device (22, 23) is arranged to be moved in the length (x) to twist both the first and the second locking device (9, 14) about respective geometric axes, which geometric axes extend transversely (z) of the load exchanger frame.

7. A load exchanger frame according to anyone of claims 1-5, wherein the linking device (36) is arranged to be twisted about a geometric axis, extending longitudinally (x) of the load exchanger frame, wherein a cam mechanism (34, 35) is arranged to follow the twisting motions of the linking device (36) and, depending on the twisting direction, transfer the twisting motion to a raise or lowering of the first locking device (9) in the height (y) of the load exchanger frame, while the second locking device (14) is arranged to follow the twisting motions of the linking device (36).

8. A load exchanger frame according to anyone of claims 1-7, which, at its front end comprises an impact beam (4) travelling transversely (z) of the load exchanger frame and intended to abut a stoppage on the equipment of the load exchanger vehicle, wherein the impact bream (4) is movable in the height (y) of the load exchanger frame between an upper state and a lower state, wherein the impact beam (4) is operatively coupled to the regulator (21, 37), so that when the regulator (21, 37) is in the first state, the impact beam (4) is in its upper state, and when the regulator (21, 37) is in the second state, the impact beam (4) is in its lower state.

9. A load exchanger frame according to anyone of claims 1-8, which at its front end comprises a lifting bracket device (2) for receiving a hook belonging to the equipment of the load exchanger vehicle for lifting the load exchanger frame onto the load exchanger vehicle, wherein the lifting bracket is movable between two lockable states.

10. A load exchanger frame according to claim 9, wherein the lifting bracket device comprises a guide element (2b) for interaction with the lifting bracket (2), wherein the guide element (2b) defines an arched path, along which the lifting bracket (2) is movable between said to lockable states.

## Patentansprüche

1. Lastaustauscherrahmen, der dazu vorgesehen ist, auf ein Lastaustauscherfahrzeug angehoben und daran verriegelt zu werden, umfassend:
- eine erste Verriegelungsvorrichtung (9), die einen aktiven Zustand zum Ermöglichen eines Verriegelns des Lastaustauscherrahmens an dem Lastaustauscherfahrzeug mittels der ersten Verriegelungsvorrichtung (9) und einen inaktiven Zustand, in dem ein Verriegeln mittels der ersten Verriegelungsvorrichtung (9) verhindert wird, aufweist,
- eine zweite Verriegelungsvorrichtung (14), die einen aktiven Zustand zum Ermöglichen eines Verriegelns des Lastaustauscherrahmens an dem Lastaustauscherfahrzeug mittels der zweiten Verriegelungsvorrichtung (14) und einen inaktiven Zustand, in dem ein Verriegeln mittels der zweiten Verriegelungsvorrichtung (14) verhindert wird, aufweist, **dadurch gekennzeichnet, dass** er ferner Folgendes umfasst:
- einen Regler (21, 37), der zwischen einem ersten Zustand und einem zweiten Zustand umschaltbar ist,
- eine Verbindungsvorrichtung (22, 23, 36), die den Regler (21, 37) sowohl mit der ersten Verriegelungsvorrichtung (9) als auch der zweiten Verriegelungsvorrichtung (14) verbindet, sodass eine Umschaltung des Reglers (21, 37) zwischen dem ersten und dem zweiten Zustand oder umgekehrt eine Umschaltung des Zustands der ersten und der zweiten Verriegelungsvorrichtung (9, 14) bewirkt, wobei, wenn sich der Regler (21, 37) in dem ersten Zustand befindet, sich die erste Verriegelungsvorrichtung (9) in ihrem aktiven Zustand befindet und sich die zweite Verriegelungsvorrichtung (14) in ihrem inaktiven Zustand befindet, und wenn sich der Regler (21, 37) in seinem zweiten Zustand befindet, sich die erste Verriegelungsvorrichtung (9) in ihrem inaktiven Zustand befindet und sich die zweite Verriegelungsvorrichtung (14) in ihrem aktiven Zustand befindet.

2. Lastaustauscherrahmen nach Anspruch 1, umfassend zwei parallele Seitenträger (6), die längs (x) zu dem Lastaustauscherrahmen verlaufen, wobei die erste Verriegelungsvorrichtung (9) einen Verriegelungsträger (9) umfasst, der sich quer (z) zu dem Lastaustauscherrahmen zwischen den zwei Seitenträgern (6) erstreckt, wobei der Verriegelungsträger (9) durchgehende Verriegelungslöcher aufweist, wobei Verriegelungsstifte von dem Lastaustauscherfahrzeug dazu vorgesehen sind, in dem aktiven Zustand der ersten Verriegelungsvorrichtung (9) mit diesen in Eingriff zu treten.

3. Lastaustauscherrahmen nach einem der Ansprüche 1-2, wobei die zweite Verriegelungsvorrichtung (14) Verriegelungsnasen (14) umfasst, die schwenkbar um eine Welle (16) angeordnet sind, wobei die Verriegelungsnasen (14) in den aktiven Zustand der zweiten Verriegelungsvorrichtung (14) für eine Interaktion mit Verriegelungsstiften von dem Lastaustauscherfahrzeug nach unten verdreht und in den inaktiven Zustand der zweiten Verriegelungsvorrichtung (14) nach oben verdreht werden.

4. Lastaustauscherrahmen nach einem der Ansprüche 1-3, wobei sowohl für die erste als auch die zweite Verriegelungsvorrichtung (9, 14) der inaktive Zustand impliziert, dass mindestens ein Abschnitt der Verriegelungsvorrichtung (9, 14) in der Lastaustauscherrahmenhöhe (y) höher liegt als in dem aktiven Zustand, wobei die Umschaltung zwischen der aktiven und der inaktiven Verriegelungsvorrichtung durch eine Drehbewegung der Verriegelungsvorrichtung (9, 14) oder durch eine Drehbewegung eines an die Verriegelungsvorrichtung (9) gekoppelten Mechanismus (34, 35) erlangt wird, wobei der Mechanismus die Drehbewegung in eine lineare vertikale Bewegung der Verriegelungsvorrichtung (9) umwandelt.

5. Lastaustauscherrahmen nach einem der Ansprüche 1-4, wobei der Regler (21, 37) einen verdrehbaren Griff (21) umfasst, wobei ein Verdrehen des Griffs (21) eine Verschiebung der Verbindungsvorrichtung (22, 23) in der Länge (x) des Lastaustauscherrahmens bewirkt oder wobei ein Verdrehen des Griffs (37) ein Verdrehen der Verbindungsvorrichtung (36) um eine geometrische Achse bewirkt, die in der Länge (x) des Lastaustauscherrahmens verläuft.

6. Lastaustauscherrahmen nach einem der Ansprüche 1-5, wobei die Verbindungsvorrichtung (22, 23) dazu angeordnet ist, in der Länge (x) bewegt zu werden, um sowohl die erste als auch die zweite Verriegelungsvorrichtung (9, 14) um jeweilige geometrische Achsen zu verdrehen, wobei sich die geometrischen Achsen quer (z) zu dem Lastaustauscherrahmen erstrecken.

7. Lastaustauscherrahmen nach einem der Ansprüche 1-5, wobei die Verbindungsvorrichtung (36) dazu angeordnet ist, um eine geometrische Achse verdreht zu werden, die sich längs (x) zu dem Lastaustauscherrahmen erstreckt, wobei ein Nockenmechanismus (34, 35) dazu angeordnet ist, den Verdrehbewegungen der Verbindungsvorrichtung (36) zu folgen und in Abhängigkeit von der Verdrehrichtung die Verdrehbewegung auf eine Anhebung oder Absenkung der ersten Verriegelungsvorrichtung (9) in der Höhe (y) des Lastaustauscherrahmens zu übertragen, während die zweite Verriegelungsvorrichtung (14) dazu angeordnet ist, den Verdrehbewegungen der Verbindungsvorrichtung (36) zu folgen.

8. Lastaustauscherrahmen nach einem der Ansprüche 1-7, der an seinem vorderen Ende einen Aufprallträger (4) umfasst, der quer (z) zu dem Lastaustauscherrahmen verläuft und dazu vorgesehen ist, an einen Anschlag an der Ausrüstung des Lastaustauscherfahrzeugs anzustoßen, wobei der Aufprallträger (4) in der Höhe (y) des Lastaustauscherrahmens zwischen einem oberen Zustand und einem unteren Zustand bewegbar ist, wobei der Aufprallträger (4) operativ an den Regler (21, 37) gekoppelt ist, sodass, wenn sich der Regler (21, 37) in dem ersten Zustand befindet, sich der Aufprallträger (4) in seinem oberen Zustand befindet, und wenn sich der Regler (21, 37) in dem zweiten Zustand befindet, sich der Aufprallträger (4) in seinem unteren Zustand befindet.

9. Lastaustauscherrahmen nach einem der Ansprüche 1-8, der an seinem vorderen Ende eine Kranösenvorrichtung (2) zum Aufnehmen eines Hakens, der zu der Ausrüstung des Lastaustauscherfahrzeugs gehört, zum Anheben des Lastaustauscherrahmens auf das Lastaustauscherfahrzeug umfasst, wobei die Kranöse zwischen zwei verriegelbaren Zuständen bewegbar ist.

10. Lastaustauscherrahmen nach Anspruch 9, wobei die Kranösenvorrichtung ein Führungselement (2b) zur Interaktion mit der Kranöse (2) umfasst, wobei das Führungselement (2b) einen gewölbten Weg definiert, entlang dessen die Kranöse (2) zwischen den zwei verriegelbaren Zuständen bewegbar ist.

## Revendications

1. Châssis d'échangeur de charge destiné à être soulevé et verrouillé sur un véhicule d'échangeur de charge, comprenant :
- un premier dispositif de verrouillage (9), qui présente un état actif pour permettre le verrouillage du châssis d'échangeur de charge sur le véhicule d'échangeur de charge au moyen du premier dispositif de verrouillage (9), et un état inactif, dans lequel le verrouillage au moyen du premier dispositif de verrouillage (9) est empêché,
- un deuxième dispositif de verrouillage (14), qui présente un état actif pour permettre le verrouillage du châssis d'échangeur de charge sur le véhicule d'échangeur de charge au moyen du deuxième dispositif de verrouillage (14), et un état inactif, dans lequel le verrouillage au moyen du deuxième dispositif de verrouillage (14) est empêché, **caractérisé en ce qu'**il comprend en outre :
- un régulateur (21, 37), qui est commutable entre un premier état et un deuxième état,
- un dispositif de liaison (22, 23, 36), qui relie le régulateur (21, 37) à la fois au premier dispositif de verrouillage (9) et au deuxième dispositif de verrouillage (14), de sorte qu'un commutateur du régulateur (21, 37) entre le premier et le deuxième état, ou vice versa, provoque une commutation de l'état du premier et du deuxième dispositif de verrouillage (9, 14), dans lequel, lorsque le régulateur (21, 37) est dans le premier état, le premier dispositif de verrouillage (9) est dans son état actif et le deuxième dispositif de verrouillage (14) dans son état inactif, et lorsque le régulateur (21, 37) est dans son deuxième état, le premier dispositif de verrouillage (9) est dans son état inactif et le deuxième dispositif de verrouillage (14) dans son état actif.

2. Châssis d'échangeur de charge selon la revendication 1, comprenant deux poutres latérales parallèles (6), se déplaçant longitudinalement (x) du châssis d'échangeur de charge, dans lequel le premier dispositif de verrouillage (9) comprend une poutre de verrouillage (9) s'étendant transversalement (z) du châssis d'échangeur de charge entre les deux poutres latérales (6), dans lequel la poutre de verrouillage (9) présente des trous de verrouillage traversants, avec lesquels des broches de verrouillage du véhicule d'échangeur de charge sont destinées à s'engager dans l'état actif du premier dispositif de verrouillage (9).

3. Châssis d'échangeur de charge selon l'une quelconque des revendications 1 à 2, dans lequel le deuxième dispositif de verrouillage (14) comprend des pattes de verrouillage (14) qui sont disposées de manière pivotante autour d'un arbre (16), les pattes de verrouillage (14) étant tournées vers le bas dans l'état actif du deuxième dispositif de verrouillage (14) pour interagir avec les broches de verrouillage du véhicule d'échangeur de charge et tournées vers le haut dans l'état inactif du deuxième dispositif de verrouillage (14).

4. Châssis d'échangeur de charge selon l'une quelconque des revendications 1 à 3, dans lequel, pour le premier et le deuxième dispositif de verrouillage (9, 14), l'état inactif implique qu'au moins une partie du dispositif de verrouillage (9, 14) est plus haute en hauteur (y) du châssis d'échangeur de charge que dans l'état actif, dans lequel la commutation entre le dispositif de verrouillage actif et le dispositif de verrouillage inactif est obtenue par un mouvement de rotation du dispositif de verrouillage (9, 14) ou par un mouvement de rotation d'un mécanisme (34, 35) couplé au dispositif de verrouillage (9), lequel mécanisme convertit le mouvement de rotation en un mouvement vertical linéaire du dispositif de verrouillage (9).

5. Châssis d'échangeur de charge selon l'une quelconque des revendications 1 à 4, dans lequel le régulateur (21, 37) comprend une poignée pouvant subir une torsion (21), la torsion de la poignée (21) provoquant le déplacement du dispositif de liaison (22, 23) dans la longueur (x) du châssis d'échangeur de charge, ou la torsion de la poignée (37) provoquant la torsion du dispositif de liaison (36) autour d'un axe géométrique se déplaçant dans la longueur (x) du châssis d'échangeur de charge.

6. Châssis d'échangeur de charge selon l'une quelconque des revendications 1 à 5, dans lequel le dispositif de liaison (22, 23) est agencé pour être déplacé dans la longueur (x) pour faire tourner à la fois le premier et le deuxième dispositif de verrouillage (9, 14) autour d'axes géométriques respectifs, lesquels axes géométriques s'étendent transversalement (z) du châssis d'échangeur de charge.

7. Châssis d'échangeur de charge selon l'une quelconque des revendications 1 à 5, dans lequel le dispositif de liaison (36) est agencé pour être torsadé autour d'un axe géométrique, s'étendant longitudinalement (x) du châssis d'échangeur de charge, dans lequel un mécanisme à came (34, 35) est agencé pour suivre les mouvements de torsion du dispositif de liaison (36) et, en fonction de la direction de torsion, transférer le mouvement de torsion à une montée ou une descente du premier dispositif de verrouillage (9) dans la hauteur (y) du châssis d'échangeur de charge, tandis que le deuxième dispositif de verrouillage (14) est agencé pour suivre les mouvements de torsion du dispositif de liaison (36).

8. Châssis d'échangeur de charge selon l'une quelconque des revendications 1 à 7, qui comprend, à son extrémité avant, une poutre d'impact (4) se déplaçant transversalement (z) du châssis d'échangeur de charge et destinée à venir en butée contre une butée de l'équipement du véhicule d'échangeur de charge, dans lequel la poutre d'impact (4) est mobile dans la hauteur (y) du châssis d'échangeur de charge entre un état supérieur et un état inférieur, dans lequel la poutre d'impact (4) est couplée de manière opérationnelle au régulateur (21, 37), de sorte que lorsque le régulateur (21, 37) est dans le premier état, la poutre d'impact (4) est dans son état supérieur, et lorsque le régulateur (21, 37) est dans le deuxième état, la poutre d'impact (4) est dans son état inférieur.

9. Châssis d'échangeur de charge selon l'une quelconque des revendications 1 à 8, qui comprend à son extrémité avant un dispositif de support de levage (2) destiné à recevoir un crochet appartenant à l'équipement du véhicule d'échangeur de charge pour soulever le châssis d'échangeur de charge sur le véhicule d'échangeur de charge, le support de levage étant mobile entre deux états verrouillables.

10. Châssis d'échangeur de charge selon la revendication 9, dans lequel le dispositif de support de levage comprend un élément de guidage (2b) destiné à interagir avec le support de levage (2), l'élément de guidage (2b) définissant un trajet arqué, le long duquel le support de levage (2) est mobile entre lesdits deux états verrouillables.
